Europäisches Patentamt

European Patent Office

Office européen des brevets

(11) Publication number: **0 085 245**
**B1**

(12) **EUROPEAN PATENT SPECIFICATION**

(45) Date of publication of patent specification: 23.07.86

(21) Application number: **82306808.5**

(22) Date of filing: **20.12.82**

(51) Int. Cl.⁴: **F 04 C 29/10,** B 60 H 3/00,
**F 24 F 11/02**

(54) A capacity control device for a compressor in a refrigerating system.

(30) Priority: **21.12.81 JP 206626/81**

(43) Date of publication of application:
**10.08.83 Bulletin 83/32**

(45) Publication of the grant of the patent:
**23.07.86 Bulletin 86/30**

(84) Designated Contracting States:
**DE FR GB IT SE**

(56) References cited:
**CH-A- 173 493**
**DE-A-1 403 516**
**US-A-3 924 972**

(73) Proprietor: **SANDEN CORPORATION**
**20 Kotobuki-cho**
**Isesaki-shi Gunma-ken (JP)**

(72) Inventor: **Ubukata, Tadayoshi**
**405-3 Fukiya Komochi-mura**
**Kitagunma-gun Gunma-ken (JP)**

(74) Representative: **Pritchard, Colin Hubert et al**
**Mathys & Squire 10 Fleet Street**
**London EC4Y 1AY (GB)**

Courier Press, Leamington Spa, England.

# Description

This invention relates to a control system for controlling the operation of an air conditioning system and more particularly, to a control circuit for a variable displacement compressor in an automobile air conditioning system.

In conventional air conditions, thermal control in the room generally is accomplished by the intermittent operation of the air conditioning compressor through a magnetic clutch or motor. The magnetic clutch or motor is connected to the compressor and activated by a signal from a thermostat disposed in the room. Once the temperature in the room has been lowered to a desired temperature, the refrigerating or cooling capacity of the air conditioner for supplemental cooling because of further temperature changes in the room, or for keeping the room at the desired temperature, need not be as large. Therefore, after the room has been cooled to the desired temperature, conventional air conditioning compressors are intermittently operated in response to the thermostat signal. Compressors having a large cooling capacity are operated even move intermittently so that the large load required to drive such compressors is intermittently applied to the compressor drive mechanism.

In air conditioning systems for automobiles, the compressor usually is driven by the engine of the automobile. Since the r.p.m. of the automobile engine changes continuously, the rotation frequency of the compressor also changes which in turn rapidly changes the cooling capacity of the air conditioner. Automobile air conditions generally are designed so that when the compressor is driven by the engine at normal driving speed, the air conditioner operates at optimum capacity. Therefore, when the compressor is driven by the engine at lower operating speed, or during idling, the cooling capacity of the air conditioner is insufficient in comparison with the refrigerating or cooling load. Also, when the compressor is driven by the engine at high operating speed, the cooling capacity is higher than necessary.

One known mechanism for controlling the excessive cooling capacity of an air conditioner operates by heating part of the cool air generated by the air conditioner. Part of the cool air from the evaporator of the air conditioner passes a heating unit which heats the cool air and this heated air is mixed the remaining cool air to control the temperature of the air which is blown into the room or compartment. In this mechanism, the ratio of cooling capacity to heating capacity is controlled in response to driving frequency. This mechanism for controlling air temperature is complicated and considerable energy is spent to reheat the cool air by using engine power.

In another known embodiment, the magnetic clutch which is disposed on the compressor and connected between the engine and the compressor to transmit rotating motion is intermittently operated to control the operation of the compressor. However, since the magnetic clutch may be operated at high rotation frequency, a sudden force is generated at the moment the clutch is engaged and this sudden force is transmitted to the engine and the compressor. Also, the temperature of the air blown into the compartment drastically changes upon operation of the compressor.

U.S. 3.924.972 discloses a variable capacity rotary screw compressor having a slide valve which is adjustable to vary the capacity of the compressor. Control means which are operable in either a manual or automatic mode effect movement of a spool in the slide valve, thereby to vary the compressor capacity. In the automatic mode the control means sense a variable condition, such as suction pressure at the compressor or the temperature in evaporators associated with the compressor, and respond to a change from a desired level or range of that condition by varying the compressor capacity so as to maintain the system condition at the desired level or in the desired range.

It is a primary object of this invention to provide a capacity control device for an air conditioning system, particularly an automobile air conditioner, which controls the refrigerating or cooling capacity of the air conditioner compressor in response to operating conditions to maintain the correct balance between the refrigerating capacity and the refrigeration or cooling load at all times.

It another object of this invention to provide a capacity control device for an air conditioning system, particularly an automobile air conditioner, which reduces sudden forces acting on the engine and the compressor.

It is a further object of this invention to provide a capacity control device for an air conditioning system, particularly an automobile air conditioner, which improves performance and efficiency.

According to the present invention there is provided a capacity control device adapted for use with a compressor in a refrigerating or air conditioning system, said compressor including a variable displacement device for changing the capacity of said compressor between small and large volumes, said capacity control device comprising a voltage source, actuating means for actuating said variable displacement device, and control circuit means coupled to said voltage source and to said actuating means for energizing said actuating means to actuate said variable displacement device to change the capacity of said compressor, said control circuit means being characterised by evaluating means for evaluating the required refrigerating capacity of said refrigerating system and generating an output signal representing the required rotation frequency of said compressor at the small volume capacity to satisfy the required refrigerating capacity, rotation measuring means adapted, when coupled to said compressor, to generate an output signal corresponding to the actual rotation frequency of said compressor, and comparing means connected to said evaluating means and said rotation measuring means and adapted to compare the output signals of respective evaluting means and rotation measuring means and to generate a control signal for controlling the operation of said actuating means so as to change the capacity of said compressor.

According to the invention there is also provided a capacity control device adapted for use with a compressor in a refrigerating or air conditioning system, said compressor including a variable displacement device for changing the capacity of said compressor between small and large volumes, said capacity control device comprising a voltage source, actuating means for actuating said variable displacement device, and control circuit means coupled to said voltage source and said actuating means for energizing said actuating means to actuate said variable displacement device to change the capacity of said compressor, said control circuit means being characterised by voltage divider means for providing an output signal representing a predetermined rotation frequency of said compressor at the small volume capacity, rotation measuring means adapted, when coupled to said compressor, to generate an output signal corresponding to the actual rotation frequency of said compressor, and comparing means connected to said voltage divider means and said rotation measuring means and adapted to compare the output signals of said voltage divider means and said rotation measuring means and generating a control signal for controlling the operation of said actuating means so as to change the capacity of said compressor.

One embodiment of the invention is a capacity control device for a compressor in a refrigerating or air conditioning system. The compressor includes a variable displacement device for changing the capacity of the compressor. The capacity control device controls the operation of the variable displacement device to change the capacity of the compressor from a large capacity to a small capacity, in response to the required refrigerating capacity and the actual rotation frequency of the compressor. The capacity control device includes a frequency evaluation circuit for evaluating the required rotation frequency of the compressor, when the compressor is operating at small volume capacity, in order to satisfy the required refrigerating capacity. The required refrigerating capacity is determined by the frequency evaluation circuit as a function of the temperature of the incoming air. A voltage representing the required rotation frequency of the compressor operating at small volume, i.e. the required small volume rotation frequency, is compared in a voltage comparator with a voltage representing the actual rotation frequency of the compressor. This latter voltage is generated by a frequency to voltage converter which converts an incoming pulse signal representing the rotation of the compressor to a DC voltage signal. If the required small volume rotation frequency is smaller than the actual rotation frequency, the voltage comparator generates a signal which causes the compressor to operate at small volume and vice versa if the small volume rotation frequency is larger than the actual rotation frequency.

The invention will now be described, by way of example, with reference to the accompanying drawings, in which:—

Figure 1 is a schematic diagram of an air conditioning or refrigerating system including a refrigerant circuit and a capacity control device in accordance with this invention.

Figure 2 is a characteristic diagram of the refrigerating or cooling capacity of a variable displacement compressor which is used in the refrigerant circuit of Figure 1.

Figure 3 is a circuit diagram of an embodiment of a capacity control device for the compressor of Figure 1.

Figure 4 is a diagram illustrating the relationship between the refrigerating capacity and air temperature.

Figure 5 is a flow diagram illustrating the operation of the capacity control device of Figure 3.

Figure 6 is a circuit diagram of another embodiment of the capacity control device.

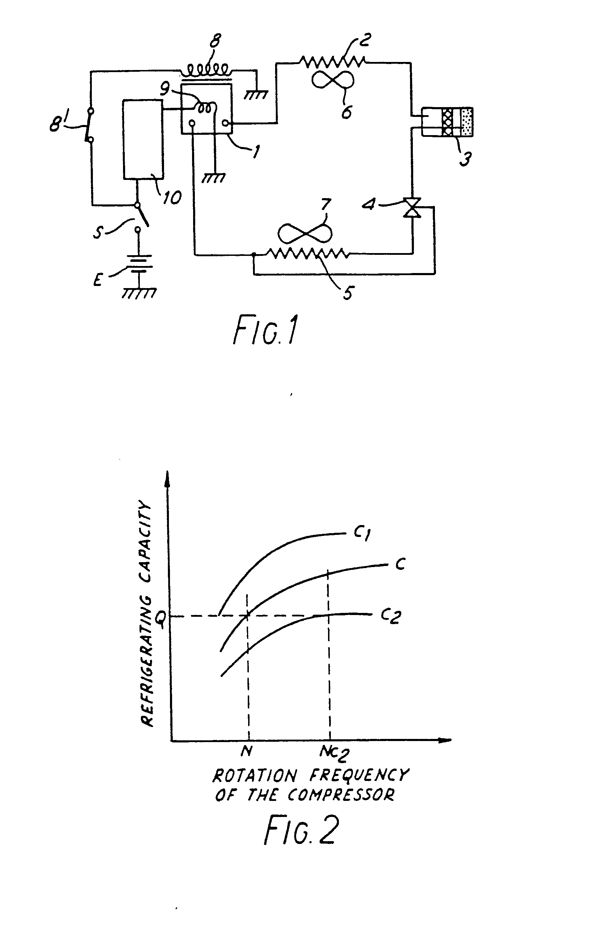

Referring to Figure 1, the basic construction of an air conditioning or refrigerating system, particularly, an automobile air conditioner, is shown. This air conditioning system comprises compressor 1, condenser 2, receiver and dryer 3, a thermostatic expansion device or valve 4 and evaporator 5. These five basic components are coupled in series to form a conventional closed vapor cycle refrigeration circuit. Refrigerant gas is compressed in compressor 1 and supplied to condenser 2 where it is condensed to lquid refrigerant and cooled by forced ventilation of fan 6. The liquid refrigerant is accumulated in receiver and dryer 3, which removes the moisture and metal chips in the liquid refrigerant. The liquid refrigerant within receiver and dryer 3 is delivered to thermostatic expansion valve 4. The refrigerant expands as it flows through valve 4 and emerges as a two-phase mixture of liquid and gas, but primarily liquid. As the two-phase mixture then flows through evaporator 5, which acts as a heat exchanger in conjunction with blower 7 which supplies air to the vehicle compartment, heat is transferred from the incoming air to the refrigerant and the entirety of the refrigerant vaporizes and assumes its gaseous state. The refrigerant gas at the evaporator outlet then is passed to the suction inlet of compressor 1.

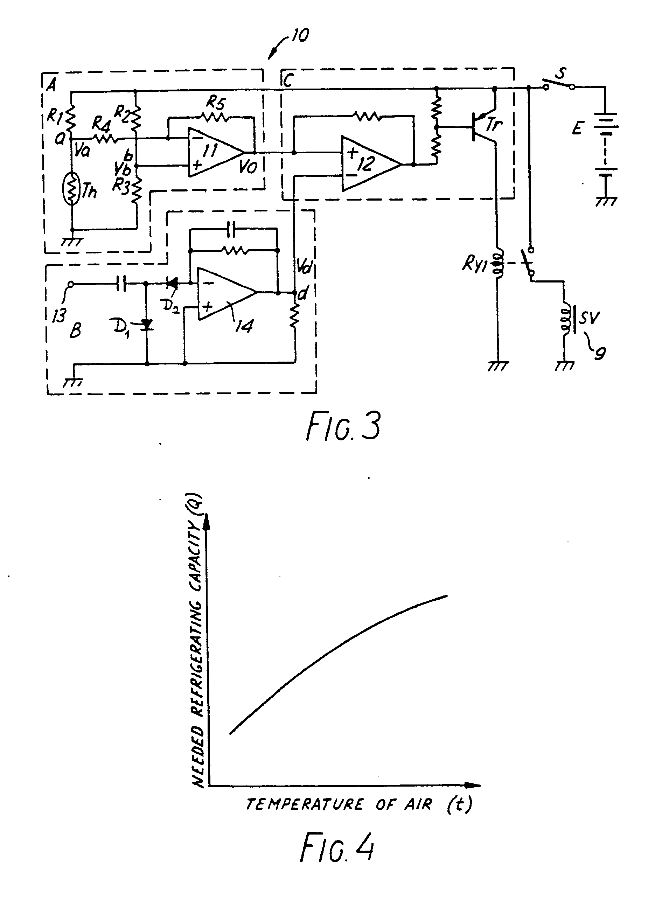

Compressor 1, which is shown in block diagram form in Figure 1, is a variable displacement compressor. In the preferred embodiment, compressor 1 is a scroll type compressor including a variable displacement device as shown in copending European patent application No. 82301205.9 filed on March 9, 1982 and falling under Art. 54.3. Compressor 1 is controlled by operation of magnetic clutch 8 and variable displacement device· 9 which changes the refrigerating capacity thereof. Magnetic clutch 8 is controlled by operation of a conventional thermostat 8' and variable displacement device 9 is controlled by operation of capacity control circuit 10, which is described in further detail below in connection with Figure 3. Capacity control circuit 10 is connected to voltage source E by on/off switch S.

As mentioned above, compressor 1 includes a variable displacement device which is capable of changing the refrigerating or cooling capacity of the compressor. The capacity of the compressor shown in Figure 1 can be changed to one of two conditions, $C_1$ or $C_2$, as shown in Figure 2. In Figure 2, curve C is the normal capacity of prior art compressors. The variable displacement device of compressor 1 includes at least one valve as shown in patent application No. 82301205.9 and this valve is controlled by solenoid 9 shown in Figure 1. Solenoid 9 is connected to voltage source E through capacity control circuit 10 and main air conditioning on/off switch S.

Referring to Figure 3, a circuit diagram of capacity control circuit 10 for controlling the variable displacement device of compressor 1 is shown. The capacity control circuit includes relay $Ry_1$ to control operation of solenoid valve SV which actuates the variable displacement device to change the capacity of compressor 1. Capacity control circuit 10 further includes small volume frequency evaluation circuit A which detects air temperature and computes the required rotation frequency as a function of temperature of compressor 1 operating at small volume $C_2$ (i.e., the required small volume rotation frequency), frequency to voltage converter circuit B to detect the actual rotation frequency of the compressor and comparison circuit C to compare the voltage outputs from small volume frequency evaluation circuit A and converter circuit B to control operation of relay $Ry_1$.

Small volume frequency evaluation circuit A includes temperature sensing thermistor Th and comparator 11. Thermistor Th is mounted on the air inlet of evaporator 5 in order to detect the temperature of incoming air. A voltage divider formed by thermistor Th and resistor $R_1$ supplies voltage Va to inverting input terminal (−) of comparator 11 via resistor $R_4$. Voltage Va, which is inversely related to the temperature of the incoming air, is compared at the comparator 11 with a reference voltage Vb, which is generated by a voltage divider formed by resistors $R_2$ and $R_3$. Voltage Vb is applied to a non-inverting input terminal (+) of comparator 11. A feedback resistor $R_5$ is connected across comparator 11 from the output terminal of comparator 11 to the inverting input terminal (−).

The relationship between the needed or required refrigerating capacity Q for maintaining a suitable temperature in the compartment and the incoming air temperature t is shown by Figure 4 and can be expressed as $Q=T(t)$. As shown, the required refrigerating capacity is directly related to the incoming air temperature. Also, as shown by Figure 2, the refrigerating capacity Q is directly related to the rotation frequency of the compressor.

Accordingly, as apparent from Figure 2, the rotation frequency $Nc_2$ at which compressor 1 can continue to operate at small volume $C_2$ can be easily calculated as a function of the required refrigerating capacity Q. Since refrigerating capacity also varies as a function of temperature as discussed above in connection with Figure 4, the required rotation frequency of the compressor can be easily determined as a function of incoming air temperature.

Frequency evaluation circuit A takes into account the above relationships between the refrigerating capacity Q and both the incoming air temperature (t) and the rotation frequency $Nc_2$ of the compressor operating at small volume $C_2$. Frequency evaluation circuit A generates an output voltage which corresponds to the required rotation frequency $Nc_2$ for the compressor to continue operating at small volume $C_2$ as a function of refrigerating capacity. The refrigerating capacity is determined in frequency evaluation circuit A as a function of incoming air temperature based on the relationship shown in Figure 4 and the rotation frequency $Nc_2$ is determined as a function refrigerating capacity based on the relationship shown in Figure 2. The output voltge Vo of frequency evaluation circuit A is given by

$$Vo=Vb+\frac{R5}{R4}$$

(Vb−Va), where Va is the voltage across thermistor Th, Vb is a reference voltage, $R_5$ is the resistance of resistance $R_5$, and $R_4$ is the resistance of resistor $R_4$. The values of resistors $R_4$ and $R_5$, as well as the values of the other elements in frequency evaluation circuit A, are set in accordance with the relationships shown in Figures 2 and 4.

Frequency to voltage converter circuit B receives a pulse signal from a conventional rotation sensor (not shown) mounted on the engine or compressor. For example, such a sensor could be mounted adjacent the rotating shaft of the compressor or engine to sense the rotation frequency of the shaft. The pulse signal, which corresponds to the rotation frequency of the engine or compressor, is supplied to terminal 13 of converter circuit B. Converter circuit B is a conventional frequency to voltage converter which includes a rectifier circuit basically formed by diodes $D_1$ and $D_2$ and a voltage comparator circuit basically formed by voltage comparator 14. The output of voltage comparator 14, which is also the output Vd of converter circuit B, is a voltage signal which varies in accordance with variations in the rotation frequency of compressor 1.

The voltage output Vo of small volume frequency evaluation circuit A is compared at comparator 12 of comparison circuit C with the output voltage Vd of frequency to voltage converter circuit B. The output of comparator 12 is coupled to the base circuit of switching transistor Tr. Relay $Ry_1$ is connected to the collector of transistor Tr and its operating contact is connected in series with solenoid valve SV. When transistor Tr is conductive, relay $Ry_1$ is energized so that solenoid valve SV actuates the variable displacement device to change the displacement of compressor 1 from large volume $C_1$ to small volume $C_2$.

In operation, if the output voltage Vo of small volume frequency evaluation circuit A is smaller than the output voltage Vd of converter circuit B, i.e., the required rotation frequency of compressor 1 operating at small volume $C_2$ in order to produce adequate refrigerating capacity (the required small volume rotation frequency) is smaller than the actual rotation frequency, then the output of comparator 12 has a low voltage level. When comparator 12 generates a low voltage level, transistor Tr is rendered conductive and relay $Ry_1$ is energized. The energization of relay $Ry_1$ actuates solenoid valve SV which in turn actuates the variable displacement device of compressor 1 to operate compressor 1 at small volume $C_2$. On the other hand, if the output Vo of evaluation circuit A is larger than the output Vd of converter circuit B, the output of comparator 12 has a high voltage level. Transistor Tr then is rendered non-conductive and relay $Ry_1$ is not energized. Thus, the displacement of compressor 1 is changed to large volume $C_1$.

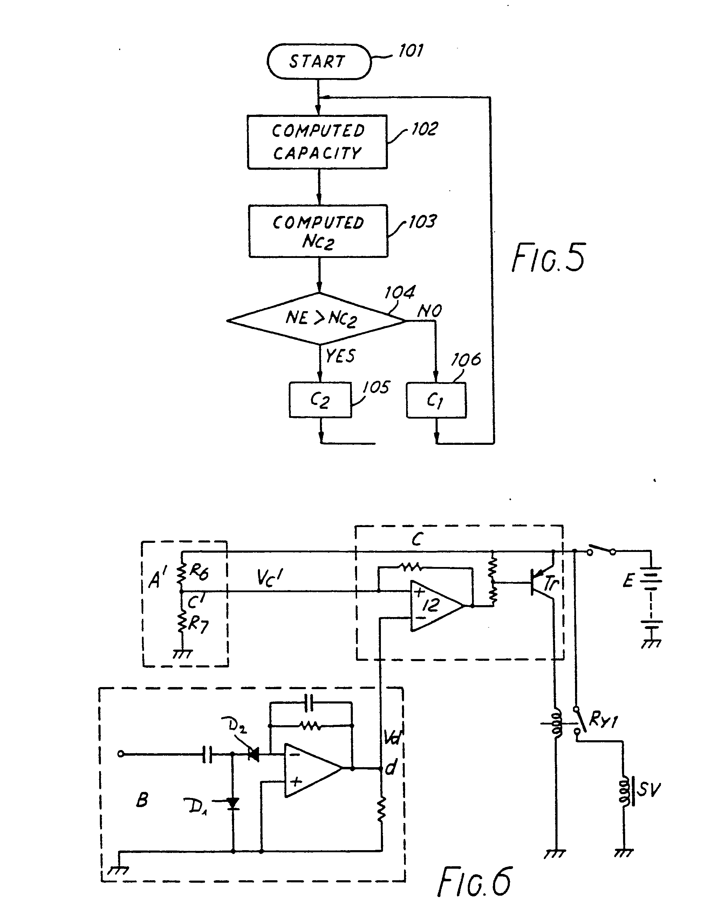

The operation of capacity control circuit 10 will now be described with reference to the flow diagram shown in Figure 5. When main switch S is actuated to connect the voltage source at start step 101, the capacity control circuit is ready for operation. At step 102, the air temperature is detected and used by small volume frequency evaluator circuit A to compute the required refrigerating capacity Q of compressor 1. After computing the required capacity at step 103, the required rotation frequency $Nc_2$ to obtain the required refrigerating capacity from step 102 is determined. At step 104, the actual rotation frequency NE of compressor 1 is compared to the calculated or required rotation frequency $Nc_2$ from step 103. If the actual rotation frequency NE of the compressor is higher than the calculated rotation frequency $Nc_2$, the required refrigerating capacity Q is already obtained. In this case, the compressor is driven at small volume $C_2$ as indicated by step 105. On the other hand, if the actual rotation frequency NE is smaller than the required rotation frequency $Nc_2$, the required refrigerating capacity has not yet been obtained so that the compressor is driven at large volume $C_1$ as indicated by step 106.

Referring to Figure 6, another embodiment of the present invention is shown. In this embodiment, the evaluation circuit A is replaced by a voltage divider A' which defines a predetermined rotation frequency $Nc_2$ of the compressor. The voltage divider A' comprises resistors $R_6$ and $R_7$ which provide a reference voltage Vc' to the non-inverted input terminal (+) of comparator 12. The reference voltage Vc' generated by voltage divider A' corresponds to the predetermined rotation frequency $Nc_2$ at small volume capacity. This voltage is compared at comparator 12 with output voltage Vd of the converter circuit B. In other words, the actual rotation frequency of the compressor is compared to the predetermined rotation frequency $Nc_2$ at small volume capacity by comparator circuit C to determine whether the compressor should be operated at small volume $C_2$ or large volume $C_1$. If the actual rotation frequency is smaller than the predetermined rotation frequency $Nc_2$, i.e. voltage Vd is smaller than voltage Vc', then the output of comparator C is low which turns on transistor Tr and energizes relay $Ry_1$. Relay $Ry_1$ in turn actuates solenoid SV which causes the compressor to operate at small volume $C_2$. If the actual rotation frequency is larger than the predetermined rotation frequency $Nc_2$, then the compressor operates at large volume $C_1$.

**Claims**

1. A capacity control device adapted for use with a compressor in a refrigerating or air conditioning system, said compressor including a variable displacement device for changing the capacity of said compressor between small and large volumes, said capacity control device comprising

a voltage source (E),

actuating means (SV), for actuating said variable displacement device, and

control circuit means (10) coupled to said voltage source (E) and to said actuating means (SV) for energizing said actuating means (SV) to actuate said variable displacement device to change the capacity of said compressor, said control circuit means (10) being characterised by evaluating means (A) for evaluating the required refrigerating capacity of said refrigerating system and generating an output signal (Vo) representing the required rotation frequency of said compressor at the small volume capacity to satisfy the required refrigerating capacity, rotation measuring means (B) adapted, when coupled to said compressor, to generate an output signal (Vd) corresponding to the actual rotation frequency of said compressor, and comparing means (C) connected to said evaluating means (A) and said rotation measuring means (B) and adapted to compare the output signals (Vo and Vd) of respective evaluating means (A) and rotation measuring means (B) and to generate a control signal for controlling the operation of said actuating means (SV) so as to change the capacity of said compressor.

2. A capacity control device as claimed in claim 1, wherein the control signal generated by said comparing means (C) energizes said actuating means (SV) to change the capacity of said compressor to a small volume when the required rotation frequency is smaller than the actual rotation frequency.

3. A capacity control device as claimed in claim 2, wherein the control signal generated by said comparing means (C) de-energizes said actuating means (SV) to change the capacity of said compressor to a large volume when the required rotation frequency is larger than the actual rotation frequency.

4. A capacity control device as claimed in claim 1, wherein said evaluating means (A) comprises temperature detecting means (Th) for detecting the temperature of the air to be cooled by said refrigerating system, and wherein said evaluating means (A) is responsive to the temperature detected by said temperature detecting (Th) means to evaluate the required refrigerating capacity.

5. A capacity control device as claimed in claim 1, wherein said rotation measuring means (B) comprises a frequency to voltage converter circuit.

6. A capacity control device adapted for use with a compressor in a refrigerating or air conditioning system, said compressor including a variable displacement device for changing the capacity of said compressor between small and large volumes, said capacity control device comprising

a voltage source (E),

actuating means (SV) for actuating said variable displacement device, and

control circuit means coupled to said voltage source (E) and said actuating means (SV) for energizing said actuating means (SV) to actuate said variable displacement device to change the capacity of said compressor, said control circuit means being characterised by voltage divider means (A') for providing an output signal (Vc') representing a predetermined rotation frequency of said compressor at the small volume capacity, rotation measuring means (B) adapted, when coupled to said compressor, to generate an output signal (Vd) corresponding to the actual rotation frequency of said compressor, and comparing means (C) connected to said voltage divider means (A') and said rotation measuring means (B) and adapted to compare the output signals (Vc' and Vd) of said voltage divider means (A') and said rotation measuring means (B) and generate a control signal for controlling the operation of said actuating means (SV) so as to change the capacity of said compressor.

7. A capacity control device as claimed in claim 6, wherein the control signal generated by said comparing means (C) energizes said actuating means (SV) to change the capacity of said compressor to a small volume when the predetermined rotation frequency is smaller than the actual rotation frequency.

8. A capacity control device as claimed in claim 7, wherein the control signal generated by said comparing means (C) de-energizes said actuating means (SV) to change the capacity of said compressor to a large volume when the predetermined rotation frequency is larger than the actual rotation frequency.

9. A refrigerating or air conditioning system where refrigerant flows through a closed refrigeration circuit including an evaporator (5), a compressor (6), a condenser (2) and a thermostatic expansion device (4), said compressor having a variable displacement device (9) to change the capacity thereof and a capacity control device as claimed in any one of the preceding claims for controlling the operation of said variable displacement device so as to change the capacity of said compressor.

10. A system as claimed in claim 9, wherein the control signal generated by said comparing means (C) energizes said actuating means (SV) to change the capacity of said compressor to a small volume when the required rotation frequency is smaller than the actual rotation frequency.

11. A system as claimed in claim 10, wherein the control signal generated by said comparing means (C) de-energizes said actuating means (SV) to change the capacity of said compressor to a large volume when the required rotation frequency is larger than the actual rotation frequency.

**Patentansprüche**

1. Mengenregeleinrichtung geeignet zum Gebrauch mit einem Kompressor in einer Kühl- oder Klimaanlage, wobei der Kompressor eine variable Verdrängungseinrichtung zum Verändern der Leistung des Kompressors zwischen kleinen und großen Volumina aufweist und wobei die Mengenregeleinrichtung aufweist:

eine Spannungsquelle (E),

eine Einschaltvorrichtung (SV) zum Einschalten der variablen Verdrängungseinrichtung und

eine Steuerkreiseinrichtung (10), die mit der Spannungsquelle (E) und der Einschaltvorrichtung (SV) zum Anregen der Einschaltvorrichtung (SV) zum Einschalten der variablen Verdrängungseinrichtung zum Verändern der Leistung des Kompressors verbunden ist,

wobei die Steuerkreiseinrichtung (10) gekennzeichnet ist durch:

eine Auswerteeinrichtung (A) zum Bestimmen der notwendigen Kühlleistung des Kühlsystemes und zur Erzeugung eines Ausgangssignales (Vo), welches die bei der kleinen Volumenleistung zur Erfüllung der notwendigen Kühlleistung notwendige Drehzahl des Kompressors darstellt;

eine Drehzahlmeßeinrichtung (B), die geeignet ist, wenn sie an dem Kompressor angeschlossen ist, ein der Ist-Drehzahl des Kompressors entsprechendes Ausgangssignal (Vd) zu erzeugen; und

eine Vergleichseinrichtung (C), die mit der Auswerteeinrichtung (A) und der Drehzahlmeßeinrichtung (B) verbunden ist und geeignet ist, die Ausgangssignale (Vo und Vd) von der entsprechenden Auswerteeinrichtung (A) und der Drehzahlmeßeinrichtung (B) zu vergleichen und ein Steuersignal zum Steuern des Betriebes der Einschaltvorrichtung (SV) so zu erzeugen, daß die Leistung des Kompressors verändert wird.

2. Mengenregeleinrichtung nach Anspruch 1, in der das von der Vergleichseinrichtung (C) erzeugte Steuersignal die Einschaltvorrichtung (SV) anregt, damit die Leistung des Kompressors zu einem kleinen Volumen gerändert wird, wenn die verlangte Drehzahl kleiner ist als die Ist-Drehzahl.

3. Mengenregeleinrichtung nach Anspruch 2, in der das von der Vergleichseinrichtung (C) erzeugte Steuersignal die Einschaltvorrichtung (SV) abregt, damit die Leistung des Kompressors zu einem großen Volumen geändert wird, wenn die verlangte Drehzahl größer ist als die Ist-Drehzahl.

4. Mengenregeleinrichtung nach Anspruch 1, in der die Auswerteeinrichtung (A) eine Temperaturmeßeinrichtung (Th) zum Nachweisen der Temperatur der durch die Kühlanlage zu kühlenden Luft aufweist und in der die Auswerteeinrichtung (A) auf die durch die Temperaturmeßeinrichtung (Th) nachgewiesene Temperatur zur Bestimmung der erforderlich Kühlleistung reagiert.

5. Mengenregeleinrichtung nach Anspruch 1, in der die Drehzahlmeßeinrichtung (B) einen Frequenz-Spannungs-Wandler aufweist.

6. Mengenregeleinrichtung geeignet zum Gebrauch mit einem Kompressor in einer Kühl- oder Klimaanlage, wobei der Kompressor eine variable Verdrängungseinrichtung zum Verändern der Leistung des Kompressors zwischen kleinen und großen Volumina aufweist und wobei die Mengenregeleinrichtung aufweist:

eine Spannungsquelle (E),

eine Einschaltvorrichtung (SV) zum Einschalten der variablen Verdrängungseinrichtung und

eine Steuerkreiseinrichtung, die mit der Spannungsquelle (E) und der Einschaltvorrichtung (SV) zum Anregen der Einschaltvorrichtung (SV) zum Einschalten der variablen Verdrängungseinrichtung zum Verändern der Leistung des Kompressors verbunden ist,

wobei die Steuerkreiseinrichtung gekennzeichnet ist durch:

eine Spannungsteilereinrichtung (A') zum Vorsehen eines eine vorbestimmte Drehzahl des Kompressors bei der kleinen Volumenleistung darstellendes Ausgangssignal (Vc');

eine Drehzahlmeßeinrichtung (B), die geeignet ist, wenn sie an den Kompressor angeschlossen ist, ein der Ist-Drehzahl des Kompressors entsprechendes Ausgangssignal (Vd) zu erzeugen;

eine Vergleichseinrichtung (C), die mit der Spannungsteilereinrichtung (A') und der Drehzahlmeßeinrichtung (B) verbunden ist und geeignet ist, die Ausgangssignale (Vc' und Vd) der Spannungsteilereinrichtung (A') und der Drehzahlmeßeinrichtung (B) zu vergleichen und ein Steuersignal zum Steuern des Betriebes der Einschaltvorrichtung (SV) so zu erzeugen, DAß die Leistung des Kompressors verändert wird.

7. Mengenregeleinrichtung nach Anspruch 6, in der das durch die Vergleichseinrichtung (C) erzeugte Steuersignal die Einschaltvorrichtung (SV) anregt, damit die Leistung des Kompressors zu einem kleinen Volumen geändert wird, wenn die vorbestimmte Drehzahl kleiner ist als die Ist-Drehzahl.

8. Mengenregeleinrichtung nach Anspruch 7, in der das durch die Vergleichseinrichtung (C) erzeugte Steuersignal die Einschaltvorrichtung (SV) abregt, damit die Leistungsfähigkeit des Kompressors zu einem großen Volumen geändert wird, wenn die vorbestimmte Drehzahl größer ist, als die Ist-Drehzahl.

9. Kühl- oder Klimaanlage, in der das Kühlmittel durch einen geschlossenen Kühlkreislauf mit einem Verdampfer (5), einem Kompressor (6), einen Kondensator (2) und eine thermostatische Expansionsvorrichtung (4) fließt, wobei der Kompressor eine variable Verdrängungseinrichtung (9) zum Verändern seiner Leistung und eine Mengenregeleinrichtung nach einem der vorherigen Ansprüche zum Regeln des Betriebes der variablen Verdrängungseinrichtung aufweist, so daß die Leistungsfähigkeit des Kompressors verändert wird.

10. Anlage nach Anspruch 9, in der das durch die Vergleichseinrichtung (C) erzeugte Steuersignal die Einschaltvorrichtung (SV), anregt, damit die Leistungsfähigkeit des Kompressors zu einem kleinen Volumen verändert wird, wenn die verlangte Drehzahl kleiner ist als die Ist-Drehzahl.

11. Anlage nach Anspruch 10, in der das durch die Vergleichseinrichtung (C) erzeugte Steuersignal die Einschaltvorrichtung (SV) abregt, damit die Leistung des Kompressors zu einem großen Volumen verändert wird, wenn die verlangte Drehzahl größer ist als die Ist-Drehzahl.

**Revendications**

1. Dispositif de commande de capacité destiné à être utilisé dans un compresseur pour système de réfrigération ou de conditionnement d'air, co compresseur comprenant un dispositif à déplacement variable permettant de modifier la capacité du compresseur entre un petit volumet et un grand volume, ce dispositif de commande de capacité comprenant

— une source de tension (E),

— des moyens de manoeuvre (SV), destinés à actionner le dispositif à déplacement variable, et

— des moyens de circuit de commande (10) branchés à la source de tension (E) et aux moyens de manoeuvre (SV) pour exciter les moyens de manoeuvre (SV) de manière à faire fonctionner le dispositif à déplacement variable pour modifier la capacité du compresseur, les moyens de circuit de commande (10) étant caractérisés en ce qu'ils comprennent des moyens de mesure (A) destinés à mesurer la capacité de réfrigération requise du système de réfrigération, et à produire un signal de sortie (Vo) représentant la vitesse de rotation requise du compresseur à la capacité de faible volume, pour répondre à la capacité de réfrigération voulue, des moyens de mesure de rotation (B) destinés, lorsqu'ils sont branchés au compresseur, à fournir un signal de sortie (Vd) correspondant à la vitesse de rotation réelle du compresseur, et des moyens de comparaison (C) branchés aux moyens de mesure (A) et aux moyens de mesure de rotation (V), de manière à comparer les signaux de sortie (Vo et Vd) respectifs des moyens de mesure de rotation (B), et à produire un signal de commande permettant de commander le fonctionnement des moyens de manoeuvre (SV) pour modifier la capacité du compresseur.

2. Dispositif de commande de capacité selon la revendication 1, caractérisé en ce que le signal de commande produit par les moyens de comparaison (C) excite les moyens de manoeuvre (SV) pour modifier la capacité du compresseur en l'amenant à sa capacité de petit volume lorsque la vitesse de rotation requise est plus petite que la vitesse de rotation réelle.

3. Dispositif de commande de capacité selon la revendication 2, caractérisé en ce que le signal de commande produit par les moyens de comparaison (C) coupe les moyens de manoeuvre (SV) pour modifier la capacité du compresseur en la faisant passer à sa capacité de grand volume, lorsque la vitesse de rotation requise est plus grande que la vitesse de rotation réelle.

4. Dispositif de commande selon la revendication 1, caractérisé en ce que les moyens de mesure (A) comprennent des moyens de détection de température (Th) destinés à détecter la température de l'air à refroidir par le système de réfrigération, et en ce que les moyens de mesure (A) répondent à la température détectée par les moyens de détection de température (Th) pour mesurer la capacité de réfrigération requise.

5. Dispositif de commande de capacité selon la revendication 1, caractérisé en ce que les moyens de mesure de rotation (B) sont constitués par un circuit de conversion vitesse/tension.

6. Dispositif de commande de capacité destiné à être utilisé dans un compresseur pour système de réfrigération ou de conditionnement d'air, ce compresseur comprenant un dispositif à déplacement variable permettant de modifier la capacité du compresseur entre un petit volume et un grand volume, ce dispositif de commande de capacité comprenant

— une source de tension (E),

— des moyens de manoeuvre (SV) destinés à actionner le dispositif à déplacement variable et,

— des moyens de circuit de commande branchés à la source de tension (E) et aux moyens de manoeuvre (SV) pour exciter les moyens de manoeuvre (SV) de manière à faire fonctionner le dispositif à déplacement variable pour modifier la capacité du compresseur, ces moyens de circuit de commande étant caractérisés en ce qu'ils comprennent des moyens de diviseur de tension (A') destinés à fournir un signal de sortie (Vc') représentant une vitesse de rotation prédéterminée du compresseur à capacité de faible volume, des moyens de mesure de rotation (B) destinés, lorsqu'ils sont branchés au compresseur, à fournir un signal de sortie (Vd) correspondant à la vitesse de rotation réelle du compresseur, et des moyens de comparaison (C) branchés aux moyens de diviseur de tension (A') et aux moyens de mesure de rotation (B), de manière à comparer les signaux de sortie (Vc' et Vd) des moyens de diviseur de tension (A') et des moyens de mesure de rotation (B), et à produire un signal de commande permettant de commander le fonctionnement des moyens de manoeuvre (SV) pour modifier la capacité du compresseur.

7. Dispositif de commande de capacité selon la revendication 6, caractérisé en ce que le signal de commande produit par les moyens de comparaison (C) excite les moyens de manoeuvre (SV) pour modifier la capacité du compresseur en l'amenant à sa capacité de petit volume, lorsque la vitesse de rotation prédéterminée est plus petite que la vitesse de rotation réelle.

8. Dispositif de commande de capacité selon la revendication 7, caractérisé en ce que le signal de commande produit par les moyens de comparaison (C) coupe les moyens de manoeuvre (SV) pour modifier la capacité du compresseur en le faisant passer à sa capacité de grand volume, lorsque la vitesse de rotation prédéterminée est plus grande que la vitesse de rotation réelle.

9. Système de réfrigération on de conditionnement d'air dans lequel le réfrigérant circule dans un circuit de réfrigération fermé comprenant un évaporateur (5), un compresseur (6), un condenseur (2), et un dispositif à expansion thermostatique (4), le compresseur étant muni d'un dispositif à déplacement variable (9) destiné à modifier la capacité, et d'un dispositif de commande de capacité selon l'une quelconque des précédentes revendications, de manière à commander le fonctionnement du dispositif à déplacement variable pour modifier la capacité du compresseur.

10. Système selon la revendication 9, caractérisé en ce que le signal de commande produit par les moyens de comparaison (C) excite les moyens de manoeuvre (SV) pour modifier la capacité du compresseur en le faisant passer à sa capacité de petit volume, lorsque la vitesse de rotation requise est plus petite que la vitesse de rotation réelle.

11. Système selon la revendication 10, caractérisé en ce que le signal de commande produit par les moyens de comparaison (C) coupe les moyens de manoeuvre (SV) pour modifier la capacité du compresseur en le faisant passer à sa capacité de grand volume, lorsque la vitesse de rotation requise est plus grande que la vitesse de rotation réelle.

FIG.1

REFRIGERATING CAPACITY

ROTATION FREQUENCY
OF THE COMPRESSOR

FIG.2

1

FIG.3

FIG.4

FIG.5

FIG.6